# FASCICULE DE BREVET EUROPEEN

(11) **EP 1 730 837 B1**
(45) Date de publication et mention de la délivrance du brevet: **15.09.2010**
(21) Numéro de dépôt: 05718234.7
(22) Date de dépôt: 21.03.2005
(51) Int. Cl.: H02P 27/02, E05F 15/16

(54) **DISPOSITIF DE COMMANDE D'UN MOTEUR D'ENTRAINEMENT DE VOLET ROULANT**
STEUEREINRICHTUNG FÜR EINEN ROLLADENANTRIEBSMOTOR
CONTROL DEVICE FOR ROLLER SHUTTER DRIVE MOTOR

(30) Priorité: 22.03.2004 FR 0402927
(43) Date de publication de la demande: 13.12.2006
(73) Titulaire: Somfy SAS, 74300 Cluses (FR)
(72) Inventeur: BRUNO, Serge, F-74460 Marnaz (FR)
(74) Mandataire: Moreau, Stéphane Michel
(86) Numéro de dépôt international: PCT/IB2005/000727
(87) Numéro de publication internationale: WO 2005/093940

(56) Documents cités:
- EP-A- 0 822 315
- EP-A- 1 184 753
- FR-A- 2 806 510

## Description

L'invention concerne le domaine de l'alimentation et de la commande d'actionneurs destinés à la manoeuvre d'équipements de fermeture et/ou de protection solaire et d'écrans, dans le bâtiment. Elle concerne en particulier un dispositif de commande selon le préambule de la revendication 1. Elle concerne également un actionneur comprenant un tel dispositif de commande.

Ces actionneurs sont alimentés par le réseau alternatif, par exemple 230 V 50 Hz.

Lorsque ces actionneurs sont commandés par un montage inverseur relié à la phase du réseau alternatif et comprennent un circuit électronique de pilotage, il est nécessaire de pouvoir fournir à ce circuit de pilotage au moins deux tensions de commande donnant l'état de l'inverseur de commande. Un tel besoin est par exemple illustré par le brevet US 6,078,159, ou encore par les demandes EP 0 822 315 et EP 0 770 757 qui décrivent différents dispositifs permettant la commande d'un moteur asynchrone pour la manoeuvre d'éléments mobiles.

Il est de plus souvent utile de mesurer une tension représentative de la tension aux bornes du condensateur de déphasage du moteur, quand il s'agit d'un moteur asynchrone (également appelé moteur à induction) monophasé à condensateur permanent. En effet, il est connu que cette tension est fortement dépendante de la valeur du couple exercé par l'élément sur le moteur. Le circuit de pilotage peut ainsi être conçu pour traiter cette information et arrêter le moteur lorsque l'élément mobile entraîné arrive en butée. Un capteur de position peut également être prévu pour transmettre au circuit de pilotage une information sur la position de l'élément, cette information provoquant l'arrêt du moteur lorsque l'élément mobile arrive en fin de course. Dans le cas où le moteur est un moteur à courant continu, il est également utile d'identifier l'état de l'inverseur de commande et de mesurer de manière simple le couple lorsque le moteur est activé.

Lorsque l'arrêt de l'élément a été provoqué par un dépassement d'un seuil de couple moteur ou par l'arrivée de l'élément dans une position détectée par un capteur de position, le moteur n'est plus alimenté, mais la tension issue de l'inverseur de commande est toujours appliquée au circuit de pilotage si l'utilisateur ne l'a pas ramené en position neutre après la manoeuvre. Il s'ensuit une consommation électrique de repos indésirable.

L'homme du métier est alors confronté à un double problème : celui de pouvoir transmettre au circuit de pilotage l'état de l'inverseur en dissipant un minimum d'énergie électrique et celui de pouvoir également transmettre, dans le cas d'un moteur asynchrone, la tension aux bornes du condensateur de déphasage bien que ce condensateur soit, selon le sens de marche du moteur, raccordé soit à un premier enroulement du moteur, soit à un deuxième enroulement du moteur, ce qui pose un problème de référence commune.

Le but de l'invention est de fournir un dispositif de commande permettant d'améliorer les dispositifs connus de l'art antérieur et permettant de résoudre les problèmes évoqués précédemment. En particulier, le dispositif de commande permet de transmettre au circuit de pilotage l'état de l'inverseur en dissipant un minimum d'énergie électrique et de transmettre, dans certains modes de réalisation, une information de couple délivré par le moteur sans que se pose de problème de référence commune.

Le dispositif de commande selon l'invention est caractérisé par la partie caractérisante de la revendication 1.

Différents modes de réalisation du dispositif de commande sont définis par les revendications dépendantes 2 à 18.

L'actionneur selon l'invention comprend un moteur électrique et un dispositif de commande tel que défini précédemment.

Le dessin annexé illustre, à titre d'exemples, plusieurs modes de réalisation du dispositif de commande selon l'invention.
La figure 1 représente une installation comprenant un actionneur muni d'un dispositif de commande selon un premier mode de réalisation et représente le schéma électrique de ce dispositif de commande.
Les figures 2, 3 et 4 sont des schémas électriques de différents capteurs de courant pouvant être utilisés pour la réalisation du dispositif selon l'invention.
La figure 5 est un schéma électrique d'un dispositif de commande selon un deuxième mode de réalisation.
La figure 6 est un schéma électrique d'un dispositif de commande selon un troisième mode de réalisation.
La figure 7 représente une installation comprenant un actionneur constituant une première variante de celui représenté à la figure 5.
La figure 8 représente une installation comprenant un actionneur constituant une deuxième variante de celui représenté à la figure 5.
La figure 9 est un schéma électrique d'un dispositif de commande selon le premier mode de réalisation et appliqué à la commande d'un moteur à courant continu.
La figure 10 est un schéma électrique détaillant l'architecture d'une unité de commutation de puissance permettant l'alimentation d'un moteur à courant continu.

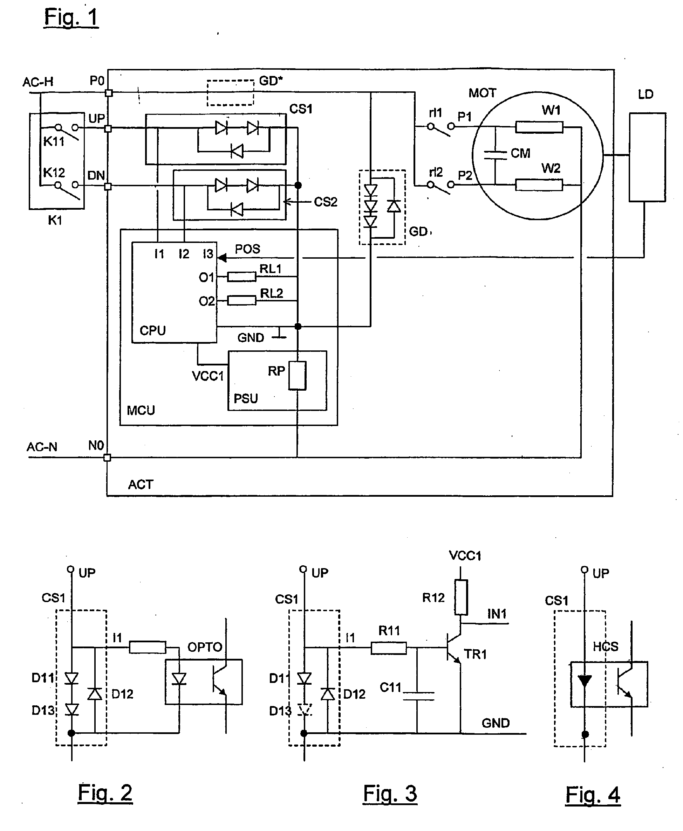

L'actionneur ACT représenté schématiquement à la figure 1 permet d'entraîner un élément mobile LD de fermeture, d'occultation ou de protection solaire équipant un bâtiment, l'ensemble constituant une installation. Cet élément peut être déplacé selon de sens opposés par rotation d'un moteur à induction MOT dans un premier sens de rotation et dans un deuxième sens de rotation. L'actionneur est alimenté par le réseau de distribution électrique entre un conducteur de phase AC-H et un conducteur de neutre AC-N.

Le moteur MOT est de type asynchrone, monophasé, à condensateur de déphasage CM permanent. Il comprend deux enroulements W1 et W2. Selon le sens de rotation désiré, le condensateur CM est disposé en série avec le premier enroulement W1 ou avec le deuxième enroulement W2. On désigne par P1 et P2 les points de raccordement du condensateur CM avec chacun des enroulements W1 et W2. Les deux autres extrémités des enroulements sont reliées au conducteur neutre AC-N.

La liaison entre le conducteur de phase AC-H et les enroulements W1 et W2 du moteur sont effectués au moyen de deux interrupteurs rl1 et rl2 commandés par un circuit électronique de pilotage MCU.

Le pilotage des interrupteurs commandés résulte d'ordres de commande donnés par un moyen de commande K1, qui peut être activé manuellement ou automatiquement, et qui établit la connexion entre le conducteur de phase AC-H du réseau et une borne de phase UP ou DN. Le moyen de commande K1 peut comprendre un interrupteur inverseur avec position neutre ou comporter deux contacts de commande K11 et K12, comme représenté sur la figure 1.

Pour transmettre certains ordres, par exemple des ordres de programmation, les deux contacts de commande peuvent être activés simultanément. Une telle activation simultanée peut également constituer un ordre d'arrêt.

Deux capteurs de courant CS1 et CS2 sont disposés en parallèle entre les deux bornes de phase UP et DN et une borne commune GND qui sert de masse électrique pour le circuit électronique de pilotage MCU.

Le circuit électronique de pilotage MCU comprend une unité logique de traitement CPU, telle qu'un microcontrôleur. Les extrémités non communes des capteurs de courant CS1 et CS2 sont directement reliées à des entrées I1 et I2 de l'unité logique de traitement CPU. Il peut s'agir d'une liaison à une entrée de microcontrôleur directe ou faite par l'intermédiaire d'un circuit d'interface comme il sera vu plu s bas.

Un élément RP d'impédance non nulle est disposé entre la borne commune GND et le conducteur neutre AC-N. Ainsi, lors de la fermeture d'un contact K11, respectivement K12, on détecte grâce au capteur CS1, respectivement CS2, un courant circulant dans l'élément RP sans que la source de tension soit court-circuitée.

Selon l'état d'une table d'affectation logée dans la mémoire de l'unité logique de traitement CPU, une activation du contact de commande K11 provoque un ordre de fermeture de l'interrupteur commandé rl1 alors qu'une activation du contact de commande K12 provoque un ordre de fermeture de l'interrupteur commandé rl2.

Ces ordres de fermeture sont établis par l'unité logique de traitement CPU et transmis au moyen de deux sorties 01 et 02, raccordées à des bobines de relais RL1 et RL2. D'autres moyens que des relais sont utilisables, par exemple des triacs ou des transistors.

Le dispositif comprend également un capteur de position (non représenté) permettant d'envoyer, sur une entrée 13 de l'unité logique de traitement, une information POS de position de l'élément mobile. Ainsi, l'unité logique de traitement CPU provoque automatiquement l'arrêt de l'alimentation du moteur lorsque l'élément mobile parvient dans une position prédéterminée, et notamment en position de fin de course.

L'unité logique de traitement CPU est alimentée sous une tension continue VCC1, référencée par rapport à la borne commune GND. Cette tension est délivrée par un circuit d'alimentation PSU comprenant un convertisseur abaisseur AC/DC. Ce convertisseur ne requiert pas d'isolation galvanique, mais il peut s'avérer particulièrement simple d'utiliser un montage classique avec transformateur abaisseur suivi de moyens de redressement et de filtrage. Si tel est le cas, l'élément RP peut avantageusement être constitué par le primaire d'un transformateur abaisseur. Dans le cas d'une alimentation à découpage, on prend garde à vérifier qu'il existe bien un chemin d'impédance non infinie permettant le passage d'un courant de faible valeur entre la borne d'entrée du circuit d'alimentation PSU reliée au point commun GND et la borne d'entrée du circuit d'alimentation PSU reliée au conducteur neutre AC-N. L'élément RP doit laisser passer un courant au moins égal au seuil de détection des capteurs de courant CS1 et CS2.

Si, par exemple, du fait d'un redresseur placé dans le circuit d'alimentation PSU, cet élément RP permet le passage d'un courant exclusivement orienté dans l'autre sens, c'est-à-dire circulant entre la borne d'entrée du circuit d'alimentation PSU reliée au conducteur neutre AC-N et la borne d'entrée du circuit d'alimentation du circuit PSU reliée au point commun GND, alors il y a lieu d'inverser sur la figure 1, de même que sur l'ensemble des figures, l'orientation des diodes éventuellement contenues dans les capteurs de courant CS1 et CS2 ou contenues dans le groupement de diodes GD décrit plus bas.

Une connexion entre le conducteur de phase AC-H et la borne commune GND permet l'alimentation du circuit de pilotage électronique MCU en dehors des phases temporelles où le moyen de commande K1 est activé. Cette connexion se fait à travers un groupement GD de diodes antiparallèles. Selon une variante, le groupement peut également être disposé en position GD*. Dans l'exemple représenté, trois diodes permettent la circulation du courant du conducteur de phase AC-H vers le conducteur neutre AC-N et, en parallèle de ces trois diodes, une diode permet la circulation du courant du conducteur neutre AC-N vers le conducteur de phase AC-H. Ce mode de réalisation s'applique en particulier au cas où le moyen de commande K1 comprend des boutons poussoirs, sur lesquels une impulsion brève peut signifier un ordre d'activation prolongée de l'actionneur, jusqu'à ce que l'élément mobile LD atteigne une position fin de course.

Lorsque l'élément RP est le primaire d'un transformateur, le groupement GD comporte au moins deux diodes antiparallèles de manière à permettre l'alimentation alternative de ce transformateur.

La figure 2 représente un capteur de courant dans lequel la tension aux bornes d'un groupement série de deux diodes D11 et D13 est utilisée pour alimenter la diode électroluminescente d'un optocoupleur OPTO. Ainsi, la diode électroluminescente de l'optocoupleur n'est pas directement traversée par le courant primaire du circuit d'alimentation PSU. L'intérêt d'un montage avec optocoupleur est de permettre de différencier, s'il est besoin, le point commun GND et la masse électrique du circuit de pilotage (MCU). Si ce circuit de la figure 2 est utilisé comme capteur, le groupement de diodes GD doit comporter au moins trois diodes en série permettant la circulation du courant de la phase vers la borne commune GND, de manière à ce qu'il puisse être mis en court-circuit, dans ce sens, lorsque la phase est également appliquée à la borne de phase UP. Par contre, la diode D12 peut être supprimée, son rôle étant assuré par la diode antiparallèle du groupement de diodes GD. Il convient donc que la tension de seuil de conduction du groupement de diodes GD soit supérieure à la tension correspondant au seuil de détection d'un capteur de courant (CS1, CS2).

La figure 3 représente un capteur de courant dans lequel la tension aux bornes de deux diodes D11 et D13, ou même d'une seule diode D11, rend conducteur un transistor TR1. Ce transistor peut être intégré à l'étage d'entrée du microcontrôleur. Si une seule diode D11 suffit, al ors le groupement de diodes GD peut à son tour ne comporter que deux diodes en série au lieu de trois.

La figure 4 représente un capteur de courant magnétique, à magnétorésistance ou à effet Hall. Si ce capteur présente une chute de tension toujours inférieure à 0.6 V, alors le groupement de diodes GD peut comporter simplement deux diodes antiparallèles. Un tel capteur permet aussi de différencier si nécessaire la borne commune GND des capteurs de courant et la masse du circuit de pilotage (MCU).

Comme vu dans les trois exemples précédents, la constitution du groupement de diodes GD dépend des caractéristiques des capteurs de courant CS1 et CS2 : il faut que sa structure soit telle qu'une action sur le moyen de commande K1 court-circuite le groupement de diodes GD, au moins dans le sens de mesure du courant.

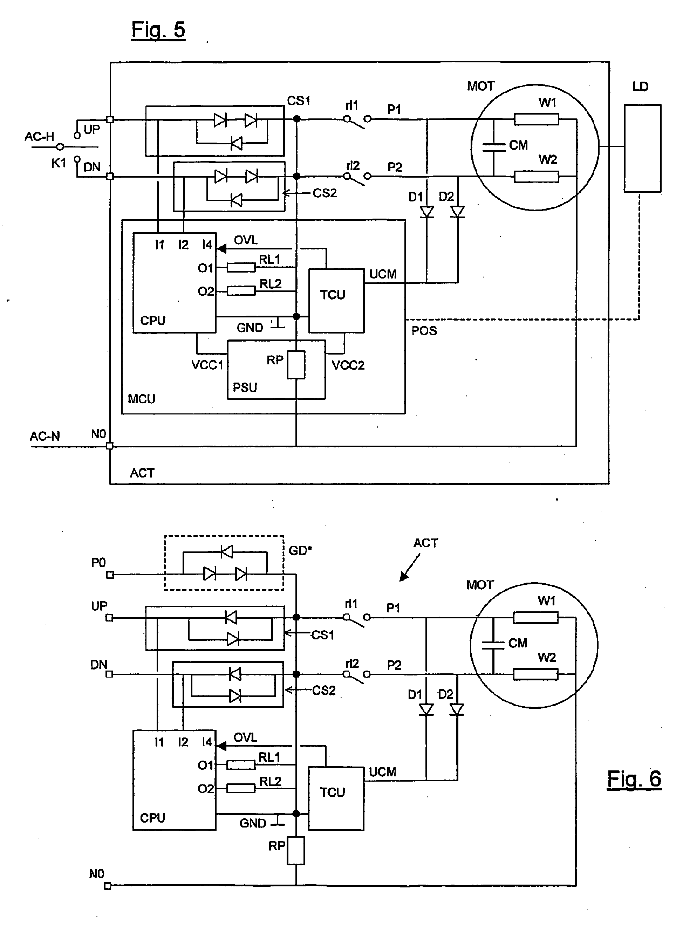

La figure 5 représente, en conservant les mêmes références qu'en figure 1 pour faciliter la comparaison, un deuxième mode de réalisation du dispositif de commande selon l'invention, dans lequel la borne commune GND sert également de point commun aux deux interrupteurs commandés rl1 et rl2.

L'intérêt de ce mode de réalisation est qu'il permet de plus le contrôle de la tension aux bornes du condensateur CM du moteur, pour surveiller le couple de ce dernier. Une unité de contrôle du couple TCU reçoit une tension UCM issue de deux diodes D1 et D2 dont les anodes sont respectivement reliées aux bornes P1 et P2 du moteur. Ce module de contrôle du couple est par ailleurs raccordé à la masse électrique constituée par la borne commune GND. La tension UCM est donc référencée par rapport à cette borne commune GND, et on constate que, dès que l'un des interrupteurs commandés rl1 ou rl2 est fermé, la tension UCM correspond bien à l'amplitude simple alternance de la tension aux bornes du condensateur CM.

L'unité de contrôle du couple TCU, éventuellement alimentée sous une tension VCC2 par le circuit d'alimentation PSU délivre en sortie un signal de dépassement du couple OVL raccordé à une entrée 14 de l'unité logique de traitement CPU.

Dans ce montage, il n'y a pas de connexion permanente entre le conducteur de phase AC-H et la borne commune GND. Les capteurs de courant CS1, CS2 sont traversés par le courant d'alimentation du circuit électronique de pilotage ainsi que par le courant absorbé par le moteur quand celui-ci est activé. Il convient donc que les capteurs de courant puissent supporter des courants importants. Dans un montage du type de celui de la figure 3, des diodes standard 1 N4007, de courant moyen 1 A conviennent parfaitement pour un courant efficace supérieur à 2 A (Imoy = leff x π / √2). Outre sa grande simplicité, l'intérêt du montage à diodes est de pouvoir délivrer une tension sensiblement constante que le courant capté soit celui de la seule alimentation du circuit de pilotage ou que ce courant soit celui de l'alimentation du circuit de pilotage ajouté à celui du moteur.

Dans ce mode de réalisation le moyen de commande est un interrupteur inverseur K1 à trois positions stables, dont une position neutre.

Bien entendu, il est possible de combiner la surveillance de couple avec la surveillance de la position de l'élément mobile. Le signal de position POS issu d'un capteur de position est représenté par une ligne pointillée qui pourrait être raccordée comme en figure 1 à une entrée 13 de l'unité logique de traitement (connexion non représentée dans un but de clarté).

Enfin, un troisième mode de réalisation combine les avantages des deux modes de réalisation précédents de manière à permettre la réalisation d'un actionneur qui puisse indifféremment être raccordé à des moyens de commande K1 de type inverseur maintenu ou de type poussoir impulsionnel. La figure 6 représente l'actionneur ACT correspondant à une telle combinaison. Pour simplifier, le circuit d'alimentation PSU n'a été représenté que par son circuit d'entré RP.

Dans ce troisième mode de réalisation, on suppose que deux diodes antiparallèles suffisent à réaliser les capteurs de courant, tels que ceux représentés par le schéma de la figure 3. Le groupement de diodes GD* est intercalé entre le conducteur de phase auquel il est connecté en permanence et la borne commune GND qui est également une borne commune des interrupteurs commandés rl1 et rl2. Le groupement de diodes GD* comprend donc au moins deux diodes en série permettant le passage du courant du conducteur de phase vers la borne commune GND.

Ce mode de réalisation permet la surveillance du couple moteur par mesure de la tension aux bornes du condensateur. Il est également possible d'adjoindre une surveillance de position comme représenté en figure 1. Afin que l'actionneur puisse être aussi bien installé avec une connexion permanente entre le conducteur de phase et la borne commune GND ou sans connexion permanente entre le conducteur de phase et la borne commune GND, les capteurs de courants comprennent des diodes antiparallèles de manière à assurer la circulation du courant dans les deux sens. Les moyens de commande peuvent, dans ce cas, comprendre des boutons poussoirs ou un interrupteur inverseur, ce qui rend très flexible l'installation d'un actionneur conçu selon ce mode de réalisation.

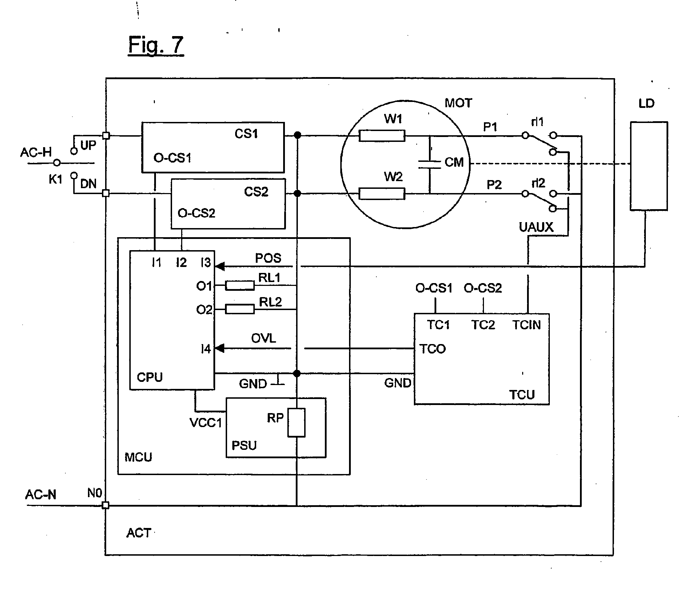

L'actionneur de la figure 7 constitue une variante de l'actionneur de la figure 5 dans le cas où la mesure de couple n'est pas nécessaire, ou encore dans le cas où celle-ci est assurée autrement que par analyse de la tension aux bornes d'un condensateur. Par exemple, le signal de position POS, appliqué à l'entrée I3 de l'unité logique de traitement CPU, suffit à contrôler le mouvement de l'élément mobile LD.

Dans ce cas, il est possible d'inverser le branchement du moteur MOT, le point commun aux deux enroulements W1 et W2 devenant relié au point commun aux deux capteurs de courant CS1 et CS2. Les autres extrémités P1 et P2 des enroulements W1 et W2 sont alors raccordées aux interrupteurs commandés rl1 et rl2, qui présentent une borne commune N0 reliée au conducteur de neutre AC-N.

Le condensateur de déphasage moteur CM est raccordé entre les extrémités non reliées P1 et P2 des deux enroulements W1 et W2.

Ce montage permet cependant de mesurer le couple du moteur par une autre méthode connue que celle de la simple tension aux bornes du condensateur, par exemple l'étude des variations de la tension auxiliaire UAUX, c'est-à-dire la tension aux bornes de l'enroulement placé en série avec le condensateur.

Le montage représenté en figure 7 permet cette mesure lorsque les interrupteurs commandés rl1 et rl2 sont de type inverseur. Dans ce cas, les deux contacts repos des relais sont raccordés à un conducteur de signal UAUX raccordé à l'unité de contrôle du couple TCU sur une entrée analogique TCIN de cette unité.

On remarque par exemple que si l'interrupteur rl1 est activé, le premier bobinage moteur W1 devient alimenté directement entre phase et neutre, tandis que le deuxième bobinage W2 est placé en série avec le condensateur CM. La tension aux bornes de W2 devient celle du conducteur de signal UAUX puisque l'interrupteur rl2 reste dans sa position de repos.

L'unité de contrôle de couple peut élaborer un signal de dépassement d'une valeur prédéfinie ou de surcharge OVL à partir de la seule mesure de la tension auxiliaire UAUX, mais de manière préférée cette mesure est combinée avec lé signal actif du premier ou du deuxième capteur de courant. Pour simplifier, les capteurs de courant CS1 et CS2 sont représentés chacun par un bloc dont sort un premier signal de courant O-CS1 et un deuxième signal de courant O-CS2. Comme dans les montages précédents, les signaux de courant sont appliqués aux première entrée I1 et deuxième entrée I2 de l'unité logique de traitement CPU, mais sont aussi appliqués à une première entrée TC1 et à une deuxième entrée TC2 de l'unité de contrôle du couple TCU. Le décalage temporel du signal de courant actif et de la tension UAUX est l'image du déphasage entre le courant dans le moteur et la tension de la phase auxiliaire et contribue à caractériser le couple moteur. Dans certains cas, cette seule mesure de déphasage donne une image suffisante du couple. Dans ce cas, la mesure de UAUX n'est pas nécessaire : il suffit de repérer par exemple les instants où cette tension s'annule.

Une sortie logique TCO de l'unité de contrôle de couple est raccordée à une quatrième entrée logique 14 de l'unité logique de traitement CPU par un conducteur OVL transmettant donc le signal de surcharge quand cette dernière est détectée.

Bien-entendu, les unités CPU et TCU, représentées comme fonctionnellement distinctes, peuvent être réalisées à l'aide d'un même microcontrôleur, ce qui rend le montage global très simple.

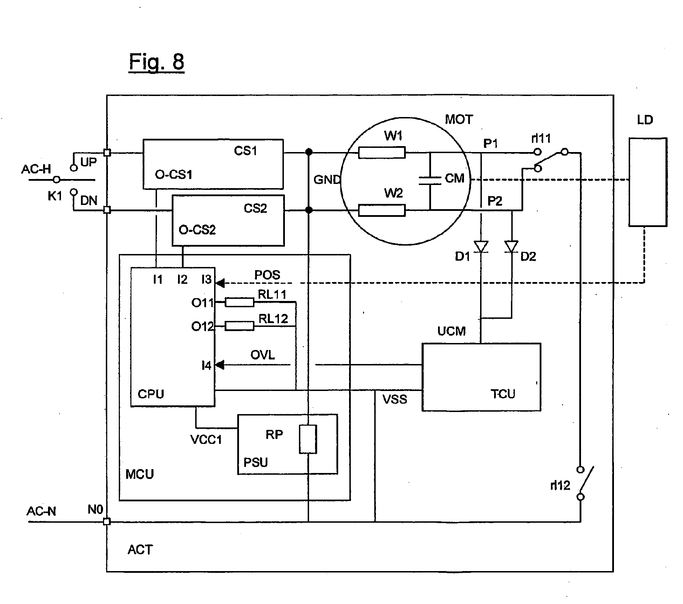

La figure 8 constitue une variante combinant cette fois la détection de couple par analyse de l'amplitude de la tension UCM aux bornes du condensateur CM comme en figure 5, avec une disposition des enroulements du moteur et du condensateur comme en figure 7.

Cette nouvelle disposition requiert que le point commun GND des deux capteurs de courant CS1 et CS2 soit maintenant séparés de la masse électrique du circuit de commande MCU. La masse électrique du circuit de commande est notée VSS sur la figure 8. Elle est reliée au conducteur de neutre AC-N du réseau. Dans ce cas, il est impératif que les capteurs de courant CS1 et CS2 aient une sortie galvaniquement isolée des conducteurs dans lequel circule le courant, comme représenté en figures 2 et 4.

Deux relais RL11 et RL12 ont des contacts disposés en série entre les enroulements W1 et W2 du moteur et le conducteur de neutre. Ils ont des rôles distincts. Le premier sert à inverser le sens de rotation du moteur par rapport au sens d'alimentation fixé par l'inverseur de commande K1, à l'aide du contact inverseur rl11. Le deuxième sert à alimenter le moteur ou à couper cette alimentation, à l'aide de l'interrupteur commandé rl12. Le relais RL12 peut avantageusement être remplacé par un triac.

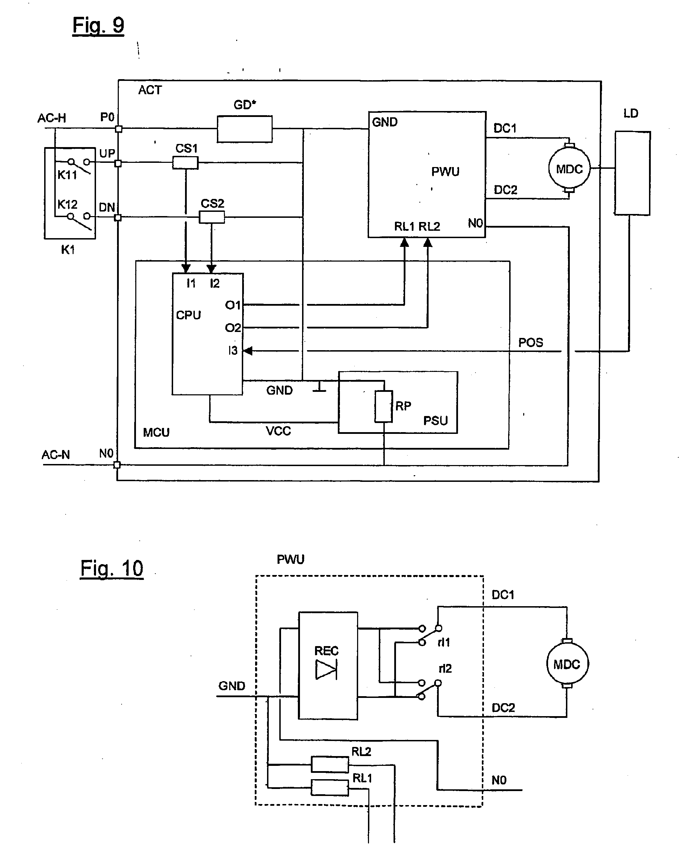

Enfin, la figure 9 montre comment le mode de réalisation de la figure 1 peut être appliqué à un moteur d'un autre type, par exemple un moteur à courant continu.

Dans ce cas, les capteurs de courant (CS1, CS2) peuvent également servir à la mesure directe du couple moteur, comme il est connu de l'homme du métier. Les capteurs de courant sont alors constitués par de simples résistances de faible valeur. Cette valeur étant telle que la chute de tension aux bornes des capteurs de courant est inférieure au seuil de conduction du groupement de diodes GD* lorsque le moteur est alimenté.

Sur la figure 9, la masse électrique GND du circuit de pilotage MCU est reliée au conducteur de phase AC-H par l'intermédiaire des capteurs de courant et/ou du groupement de diodes GD* selon l'état des moyens de commande K1. Les capteurs de courant et le groupement de diodes induisent une faible chute de tension de l'ordre du volt. Le convertisseur d'alimentation PSU comprend, dans son circuit d'entrée disposé entre la masse GND et le conducteur de neutre AC-N, un élément RP permettant la circulation d'un courant dans les capteurs de courant lorsque le moyen de commande K1 est activé. L'intensité de ce courant est au moins supérieure au seuil de détection des capteurs de courant CS1 et CS2. L'élément RP est par exemple le primaire du transformateur inclus dans le convertisseur d'alimentation.

Les relais (statiques ou électromagnétiques) sont pilotés par les sorties 01 et 02 de l'unité logique de traitement CPU et sont intégrés dans une unité de commutation de puissance PWU, détaillée en figure 10. Cette unité contient un redresseur REC de type pont de Graëtz.

Dans le cas où il n'y a pas de liaison permanente entre le conducteur de phase AC-H et l'actionneur, et que le moyen de commande K1 est un inverseur, comme représenté en figure 5, l'utilisation de diodes dans les capteurs CS1 et CS2 pourra avantageusement être mise à profit pour constituer une partie de la fonction de redressement nécessaire à l'alimentation du moteur à courant continu MDC.

Par exemple, si un redressement simple alternance suffit à l'alimentation de moteur MDC, le choix le plus simple est d'utiliser une seule diode pour chacun des capteurs CS1 et CS2, par exemple conductrice pour un courant allant de la borne UP (respectivement de la borne DN) vers la borne commune GND. Dans ce cas, le redresseur REC de la figure 10 n'est plus nécessaire et le quadripôle correspondant est remplacé par deux fils conducteurs assurant la liaison respective de la borne commune GND et de la troisième borne N0 avec chaque paire d'interrupteurs commandés rl1 et rl2.

De manière préférée, tous les éléments compris dans l'actionneur ACT décrit aux figures 1 à 10 sont contenus dans une même enveloppe, constituant le boîtier ou carter de l'actionneur.

## Revendications

1. Dispositif de commande d'un moteur (MOT) d'entraînement d'un élément (LD) de fermeture, d'occultation ou de protection solaire ou d'un écran mobile, alimenté par une source de tension alternative entre un conducteur de phase (AC-H) et un conducteur de neutre (AC-N), comprenant une première borne (UP), une deuxième borne (DN) et une troisième borne (N0) reliée au conducteur de neutre (AC-N), le dispositif alimentant le moteur (MOT) pour le faire tourner dans un premier sens lorsque la première borne (UP) est reliée au conducteur de phase (AC-H) et alimentant le moteur (MOT) pour le faire tourner dans un deuxième sens lorsque la deuxième borne (DN) est reliée au conducteur de phase (AC-H), **caractérisé en ce qu'**il comprend un premier capteur de courant (CS1), et un deuxième capteur de courant (CS2), raccordés respectivement à une première entrée (I1) et à une deuxième entrée (I2) d'un circuit (MCU) de pilotage d'interrupteurs commandés (rl1, rl2 ; rl11, rl12) susceptibles de fermer différents circuits d'alimentation du moteur, **en ce que** les deux capteurs de courant (CS1, CS2) ont une borne commune (GND) et sont respectivement connectés aux bornes (UP, DN) par leur autre borne et **en ce qu'**un élément (RP) disposé entre le conducteur de neutre (AC-N) et la borne commune (GND) des capteurs de courant assure la circulation d'un courant supérieur au seuil de détection des détecteurs de courant lorsque la première borne (UP) ou la deuxième borne (DN) est reliée au conducteur de phase (AC-H).

2. Dispositif de commande selon la revendication 1, **caractérisé en ce que** les interrupteurs commandés (rl1, rl2) d'alimentation du moteur sont reliés au conducteur de phase (AC-H) sans moyen d'interruption.

3. Dispositif de commande selon la revendication 1, **caractérisé en ce que** les interrupteurs commandés (rl1, rl2) d'alimentation du moteur sont reliés au conducteur de phase (AC-H) par l'intermédiaire de la première borne (UP) ou de la deuxième borne (DN).

4. Dispositif de commande selon la revendication 1, **caractérisé en ce que** les interrupteurs commandés (rl1, rl2) d'alimentation du moteur sont respectivement reliés, d'une part, à l'un des enroulements (W1, W2) du moteur et, d'autre part, au conducteur de neutre (AC-N).

5. Dispositif de commande selon la revendication 1, **caractérisé en ce que** les interrupteurs commandés (rl11, rl12) d'alimentation du moteur sont disposés en série, raccordés par une borne commune, l'un des interrupteurs (rl11) étant de type inverseur et relié par ses autres bornes à chacun des enroulements (W1, W2) du moteur et, l'autre interrupteur commandé (rl12) étant relié par son autre borne au conducteur de neutre (AC-N).

6. Dispositif de commande selon l'une des revendications précédentes, **caractérisé en ce que** les capteurs de courant (CS1, CS2) comprennent des composants de conduction à seuil.

7. Dispositif de commande selon la revendication 6, **caractérisé en ce que** les capteurs de courant (CS1, CS2) comprennent des diodes.

8. Dispositif de commande selon la revendication 7, **caractérisé en ce que** les capteurs de courant (CS1, CS2) sont constitués par une diode ou des groupements de diodes antiparallèles.

9. Dispositif de commande selon la revendication 6, **caractérisé en ce que** les capteurs de courant (CS1, CS2) comprennent un dispositif optoélectronique, un dispositif à effet Hall ou un dispositif à magnétorésistance.

10. Dispositif de commande selon l'une des revendications précédentes, **caractérisé en ce que** l'élément (RP) est le circuit d'entrée d'un convertisseur (PSU) permettant d'alimenter le circuit de pilotage (MCU).

11. Dispositif de commande selon la revendication 10, **caractérisé en ce que** l'élément (RP) est le primaire d'un transformateur.

12. Dispositif de commande selon l'une des revendications 1 à 11, **caractérisé en ce qu'**il comprend une liaison permanente entre le conducteur de phase (AC-H) et la borne commune (GND) des détecteurs de courant par l'intermédiaire d'un groupement de diodes (GD, GD*) tel que la tension de seuil de conduction du groupement de diodes est supérieure à la tension correspondant au seuil de détection des capteurs de courant (CS1, CS2).

13. Dispositif de commande selon l'une des revendications 1 à 12, **caractérisé en ce que** le moteur (MOT) est du type à induction à condensateur permanent.

14. Dispositif de commande selon l'une des revendications 1 à 12 **caractérisé en ce que** le moteur (MOT) est du type à courant continu.

15. Dispositif de commande selon l'une des revendications précédentes, **caractérisé en ce qu'**il comprend des moyens de commande (K1) munis de contacts (K11) permettant de relier le conducteur de phase (AC-H) à la première borne (UP) et de contacts (K12) permettant de relier le conducteur de phase (AC-H) à la deuxième borne (DN).

16. Dispositif de commande selon la revendication 15, **caractérisé en ce que** les moyens de commande comprennent des boutons poussoirs.

17. Dispositif de commande selon la revendication 15, **caractérisé en ce que** les moyens de commande comprennent un interrupteur inverseur.

18. Dispositif de commande selon l'une des revendications précédentes, **caractérisé en ce que** la borne commune (GND) des deux capteurs de courant (CS1, CS2) constitue la masse du circuit de pilotage (MCU).

19. Actionneur (ACT) **caractérisé en ce qu'**il comprend un moteur électrique (MOT) et un dispositif de commande selon l'une des revendications précédentes.

## Claims

1. Device for controlling a motor (MOT) driving an element (LD) for closing, privacy or solar protection or a movable screen, powered by an alternating voltage source between a phase conductor (AC-H) and a neutral conductor (AC-N), comprising a first terminal (UP), a second terminal (DN), and a third terminal (N0) connected to the neutral conductor (AC-N), the device supplying power to the motor (MOT) for making it rotate in a first direction when the first terminal (UP) is connected to the phase conductor (AC-H), and supplying power to the motor (MOT) for making it rotate in a second direction when the second terminal (DN) is connected to the phase conductor, **characterised in that** the device comprises a first current sensor (CS1) and a second current sensor (CS2) that are connected respectively to a first input (I1) and a second input (I2) of a circuit (MCU) for driving controlled switches (rl1, rl2; rl11, rl12) capable of closing different supply circuits for the motor; **in that** the two current sensors (CS1, CS2) have a common terminal (GND) and are respectively connected to the terminals (UP, DN) through their other terminal; and **in that** an element (RP) inserted between the neutral conductor (AC-N) and the common terminal (GND) of the current sensors guarantees the conduction of a current which is higher than the detection threshold of the current sensors when the first terminal (UP) or the second terminal (DN) is connected to the phase conductor (AC-H).

2. Control device according to claim 1, **characterised in that** the controlled switches (rl1, rl2) of the motor supply are connected to the phase conductor (AC-H) without any switching means.

3. Control device according to claim 1, **characterised in that** the controlled switches (rl1, rl2) of the motor supply are connected to the phase conductor (AC-H) via the first terminal (UP) or the second terminal (DN).

4. Control device according to claim 1, **characterised in that** the controlled switches (rl1, rl2) of the motor supply are connected, respectively, to one of the windings (W1, W2) of the motor, on the one hand, and to the neutral conductor (AC-N), on the other hand.

5. Control device according to claim 1, **characterised in that** the controlled switches (rl11, rl12) of the motor supply are placed in series and connected by a common terminal, the one switch (rl11) being a reversing switch and connected with its other terminals to each of the windings (W1, W2) of the motor, the other controlled switch (rl12) being connected with its other terminal to the neutral conductor (AC-N).

6. Control device according to one of the preceding claims, **characterised in that** the current sensors (CS1, CS2) comprise threshold conducting components.

7. Control device according to claim 6, **characterised in that** the current sensors (CS1, CS2) compris diodes.

8. Control device according to claim 7, **characterised in that** the current sensors (CS1, CS2) are formed by a diode or by groups of antiparallel diodes.

9. Control device according to claim 6, **characterised in that** the current sensors (CS1, CS2) comprise an optoelectronic device, a Hall effect device or a magnetoresistive device.

10. Control device according to one of the preceding claims, **characterised in that** the element (RP) is the input circuitry of a converter (PSU) allowing the power supply of the drive circuit (MCU).

11. Control device according to claim 10, **characterised in that** the element (RP) is the primary winding of a transformer.

12. Control device according to any one of claims 1 to 11, **characterised in that** it comprises a permanent connection between the phase conductor (AC-H) and the common terminal (GND) of the current sensors via a group of diodes (GD, GD*) in such a manner that the threshold voltage of conduction of the group of diodes is higher than the corresponding threshold voltage of detection of the current sensors (CS1, CS2).

13. Control device according to one of claims 1 to 12, **characterised in that** the motor (MOT) is of the induction with permanent capacitor type.

14. Control device according to one of claims 1 to 12, **characterised in that** the motor (MOT) is of the direct current type.

15. Control device according to any one of the preceding claims, **characterised in that** it comprises control means (K1) equipped with contacts (K11) allowing the connection of the phase conductor (AC-H) to the first terminal (UP), and with contacts (K12) allowing the connection of the phase conductor (AC-H) with the second terminal (DN).

16. Control device according to claim 15, **characterised in that** the control means comprise press-buttons.

17. Control device according to claim 15, **characterised in that** the control means comprise a reversing switch.

18. Control device according to any one of the preceding claims, **characterised in that** the common terminal (GND) of the two current sensors (CS1, CS2) forms the ground of the drive circuit (MCU).

19. Actuator (ACT), **characterised in that** comprises an electric motor (MOT) and a control device according to any one of the preceding claims.

## Patentansprüche

1. Vorrichtung zur Steuerung eines Motors (MOT) zum Antrieb eines Elements (LD) zum Verschliessen, zur Verdunkelung oder zum Sonnenschutz, oder eines beweglichen Schirms, wobei die Vorrichtung von einer Quelle einer Wechselspannung gespeist wird, die zwischen einem Phasenleiter (AC-H) und einem Nullleiter (AC-N) anliegt, und einen ersten Anschluss (UP), einen zweiten Anschluss (DN) und einen dritten Anschluss (N0) aufweist, welcher mit dem Nullleiter (AC-N) verbunden ist, und wobei die Vorrichtung, welche den Motor (MOT) speist, um ihn in einer ersten Drehrichtung laufen zu lassen, wenn der erste Anschluss (UP) am Phasenleiter (AC-H) anliegt, und um den Motor (MOT) zu speisen, damit er sich in einer zweiten Drehrichtung dreht, wenn der zweite Anschluss (DN) am Phasenleiter (AC-H) anliegt, **dadurch gekennzeichnet, dass** die Vorrichtung einen ersten Stromfühler (CS1) und einen zweiten Stromfühler (CS2) aufweist, welche jeweils mit einem ersten Eingang (11) und mit einem zweiten Eingang (12) einer Schaltung (MCU) zur Steuerung von Steuerschaltern (rl1, rl2; rl11, rl12) verbunden sind, welche zum Schliessen unterschiedlicher Speiseschaltungen des Motors bestimmt und geeignet sind, dass die beiden Stromfühler (CS1, CS2) an einem gemeinsamen Anschluss (GND) anliegen und mit ihrem anderen Anschluss jeweils mit den Anschlüssen (UP, DN) verbunden sind, und dass ein Element (RP) zwischen dem Nullleiter (AC-N) und dem gemeinsamen Anschluss (GND) der Stromfühler geschaltet ist und das Fliessen eines Stroms ermöglicht, welcher stärker ist als der Schwellenwert des Abfühlens der Stromfühler, wenn der erste Anschluss (UP) oder der zweite Anschluss (DN) mit dem Phasenleiter (AC-H) verbunden ist.

2. Steuervorrichtung nach Anspruch 1, **dadurch gekennzeichnet, dass** die Steuerschalter (rl1, rl2) der Stromversorgung des Motors ohne Zwischenschaltung von Schaltmitteln am Phasenleiter (AC-H) anliegen.

3. Steuervorrichtung nach Anspruch 1, **dadurch gekennzeichnet, dass** die Steuerschalter (rl1, rl2) zur Stromversorgung des Motors über den ersten Anschluss (UP) oder den zweiten Anschluss (DN) am Phasenleiter (AC-H anliegen.

4. Steuerschalter nach Anspruch 1, **dadurch gekennzeichnet, dass** die Steuerschalter (rl1, rl2) zur Stromversorgung des Motors jeweils einerseits an einer der Windungen (W1, W2) des Motors und andererseits am Nullleiter (AC-N) anliegen.

5. Steuervorrichtung nach Anspruch 1, **dadurch gekennzeichnet, dass** die Steuerschalter (rl11, rl12) zur Stromversorgung des Motors in Serie geschaltet sind und einen gemeinsamen Anschluss besitzen, wobei einer der Schalter (rl11) ein Umsteuerschalter ist und mit seinen beiden anderen Anschlüssen jeweils mit einer Windung (W1, W2) des Motors verbunden ist, und wobei der andere Steuerschalter (rl12) mit seinem zweiten Anschluss am Nullleiter (AC-N) anliegt.

6. Steuervorrichtung nach einem der vorstehenden Ansprüche, **dadurch gekennzeichnet, dass** die Stromfühler (CS1, CS2) Bauteile aufweisen, deren Stromleitung einen Schwellenwert besitzt.

7. Steuervorrichtung nach Anspruch 6, **dadurch gekennzeichnet, dass** die Stromfühler (CS1, CS2) Dioden aufweisen.

8. Steuervorrichtung nach Anspruch 7, **dadurch gekennzeichnet, dass** die Stromfühler (CS1, CS2) aus einer Diode oder antiparallel geschalteten Diodengruppen bestehen.

9. Steuervorrichtung nach Anspruch 6, **dadurch gekennzeichnet, dass** die Stromfühler (CS1, CS2) eine optoelektronische Vorrichtung, eine Halleffekt-Vorrichtung oder eine magnetoresistive Vorrichtung aufweisen.

10. Steuervorrichtung nach einem der vorstehenden Ansprüche, **dadurch gekennzeichnet, dass** das Element (RP) aus der Eingangsschaltung eines Wandlers (PSU) besteht, welcher die Steuerschaltung (MCU) mit Strom versorgt.

11. Steuervorrichtung nach Anspruch 10, **dadurch gekennzeichnet, dass** das Element (RP) die Primärwicklung eines Transformators ist.

12. Steuerschaltung nach einem der Ansprüche 1 bis 11, **dadurch gekennzeichnet, dass** sie eine dauernde Verbindung zwischen dem Phasenleiter (AC-H) und dem gemeinsamen Anschluss (GND) der Stromfühler aufweist, wobei eine Diodengruppe (GD, GD*) zwischengeschaltet ist, derart, dass die Schwellenspannung der Stromleitung der Diodengruppe höher ist als die Spannung, welche der Stromfühlschwelle der Stromfühler (CS1, CS2) entspricht.

13. Steuervorrichtung nach einem der Ansprüche 1 bis 12, **dadurch gekennzeichnet, dass** der Motor (MOT) ein Induktionsmotor mit Dauerkondensator ist.

14. Steuervorrichtung nach einem der Ansprüche 1 bis 12, **dadurch gekennzeichnet, dass** der Motor (MOT) ein Gleichstrommotor ist.

15. Steuervorrichtung nach einem der vorstehenden Ansprüche, **dadurch gekennzeichnet, dass** sie Mittel zur Ansteuerung (K1) enthält, welche Kontakte (K11) aufweisen, die eine Verbindung des Phasenleiters (AC-H) mit dem ersten Anschluss (UP) herstellen, sowie Kontakte (K12) besitzt, welche eine Verbindung des Phasenleiters (AC-H) mit dem zweiten Anschluss (DN) herstellen.

16. Steuervorrichtung nach Anspruch 15, **dadurch gekennzeichnet, dass** die Ansteuerungsmittel aus Drucktasten bestehen.

17. Steuervorrichtung nach Anspruch 15, **dadurch gekennzeichnet, dass** die Ansteuerungsmittel einen Umsteuerschalter enthalten.

18. Steuervorrichtung nach einem der vorstehenden Ansprüche, **dadurch gekennzeichnet, dass** der gemeinsame Anschluss (GND) der beiden Stromfühler (CS1, CS2) die Masse der Steuerschaltung (MCU) bilden.

19. Antriebsvorrichtung (ACT), **dadurch gekennzeichnet, dass** sie einen Elektromotor (MOT) und eine Steuervorrichtung nach einem der vorstehenden Ansprüche aufweist.
